(19) Europäisches Patentamt / European Patent Office / Office européen des brevets

(11) **EP 4 262 141 B1**

(12) **FASCICULE DE BREVET EUROPEEN**

(45) Date de publication et mention de la délivrance du brevet:
**05.03.2025 Bulletin 2025/10**

(21) Numéro de dépôt: **23167865.7**

(22) Date de dépôt: **13.04.2023**

(51) Classification Internationale des Brevets (IPC):
*H04L 9/14* (2006.01)    *H04L 9/00* (2022.01)
*H04L 9/06* (2006.01)

(52) Classification Coopérative des Brevets (CPC):
**H04L 9/008; H04L 9/065; H04L 9/14;** H04L 2209/42

(54) **METHODE D'INTERROGATION CONFIDENTIELLE MULTI-UTILSATEUR DE LA PRÉSENCE D'UN ENREGISTREMENT DANS UNE BASE DE DONNÉES**

VERFAHREN ZUR VERTRAULICHEN ABFRAGE MEHRERER INHABER BEI DER ANWESENHEIT EINER AUFZEICHNUNG IN EINER DATENBANK

CONFIDENTIAL MULTI-USER INTERROGATION METHOD FOR THE PRESENCE OF A RECORD IN A DATABASE

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **14.04.2022 FR 2203495**

(43) Date de publication de la demande:
**18.10.2023 Bulletin 2023/42**

(73) Titulaire: **Commissariat à l'Energie Atomique et aux Energies Alternatives**
**75015 Paris (FR)**

(72) Inventeurs:
• **BOUDGUIGA, Aymen**
  **91191 GIF-SUR-YVETTE (FR)**
• **SIRDEY, Renaud**
  **91191 GIF-SUR-YVETTE (FR)**
• **STAN, Oana**
  **91191 GIF-SUR-YVETTE (FR)**
• **ZUBER, Martin**
  **91191 GIF-SUR-YVETTE (FR)**

(74) Mandataire: **Brevalex**
**Tour Trinity**
**1 B Place de la Défense**
**92400 Courbevoie (FR)**

(56) Documents cités:
• **SINGH KALPANA ET AL: "Practical personalized genomics in the encrypted domain", 2018 THIRD INTERNATIONAL CONFERENCE ON FOG AND MOBILE EDGE COMPUTING (FMEC), IEEE, 23 April 2018 (2018-04-23), pages 139 - 146, XP033351568, DOI: 10.1109/FMEC.2018.8364056**
• **ENQUERY ET AL: "EncryptedQuery: Scalable Private Information Retrieval", 29 November 2018 (2018-11-29), pages 1 - 20, XP093027784, Retrieved from the Internet <URL:https://enquery.net/wp-content/uploads/2018/12/EncryptedQuery-White-Paper.pdf> [retrieved on 20230228]**
• **ABINAYA B ET AL: "A survey on genomic data by privacy-preserving techniques perspective", COMPUTATIONAL BIOLOGY AND CHEMISTRY, ELSEVIER, AMSTERDAM, NL, vol. 93, 29 June 2021 (2021-06-29), XP086711636, ISSN: 1476-9271, [retrieved on 20210629], DOI: 10.1016/J.COMPBIOLCHEM.2021.107538**
• **XINYI ZHAO ET AL: "Research on the privacy-preserving retrieval over ciphertext on cloud", 2016 6TH INTERNATIONAL CONFERENCE ON INFORMATION COMMUNICATION AND MANAGEMENT (ICICM), IEEE, 29 October 2016 (2016-10-29), pages 100 - 104, XP033022107, DOI: 10.1109/INFOCOMAN.2016.7784223**

## Description

### Domaine technique

La présente invention concerne de manière générale le domaine de l'interrogation confidentielle d'une base de données. Elle fait appel au chiffrement homomorphe additif et au requêtage par protocole PIR (*Private Information Retrieval*).

### Etat de la technique antérieure

L'interrogation confidentielle d'une base de données permet à un client d'extraire des données d'une base hébergée par un serveur distant, sans divulgation à des tiers ou au serveur lui-même, de l'objet de la requête et du résultat de celle-ci.

Les méthodes d'interrogation confidentielle font généralement appel à un traitement par chiffrement homomorphe de la base de données requêtée. On peut distinguer celles qui utilisent un chiffrement pleinement homomorphe ou FHE (*Full Homomorphic Encryption*) de la base de données et celles qui utilisent simplement un chiffrement homomorphe additif.

Les premières autorisent une grande variété de types de requête mais ne permettent pas un passage à l'échelle en termes de taille de la base de données, autrement dit elles ne sont pas scalables à des tailles de la base importantes, à tout de moins pour des temps de latence (c'est-à-dire de réponse à une requête) inférieurs à une valeur de seuil acceptable (typiquement de quelques minutes).

Les secondes ne permettent que des requêtes de format contraint mais autorisent un passage à l'échelle aisé relativement à la taille de la base de données.

Le protocole PIR (*Private Information Retrieval*) est une méthode d'interrogation confidentielle de base de données faisant appel à un traitement par chiffrement homomorphe additif utilisant le cryptosystème de Paillier.

On trouvera par exemple une description d'une méthode d'interrogation confidentielle d'une base de données au moyen du protocole PIR dans l'article intitulé « EncryptedQuery scalable Private Information Retrieval », EnQuery, 29.11.2018.

Cette méthode d'interrogation confidentielle correspond toutefois à un cas d'usage mono-utilisateur. En effet, les données stockées dans la base sont des valeurs hachées obtenues au moyen d'une fonction de hachage cryptographique à clé privée, ladite clé privée appartenant à l'utilisateur.

Ainsi, si un second utilisateur souhaite requêter la base en question, la clé privée utilisée dans la fonction de hachage doit être communiquée au second utilisateur, sans passer par le serveur, de manière à préserver la confidentialité vis-à-vis de ce dernier.

De manière plus générale, si différents utilisateurs disposent chacun d'une base de données (du type envisagé ci-dessus) et souhaitent partager leurs droits d'accès, ils doivent s'échanger leurs clés privées, ce qui n'est pas une solution satisfaisante. En outre, on comprend dans ce scénario qu'il y a autant de clés privées que de bases de données, ce qui conduit à une multiplication du nombre de requêtes pour une même interrogation.

Le but de la présente invention est de proposer une méthode d'interrogation multi-utilisateur d'une base de données qui ne présente pas les inconvénients de l'art antérieur, en particulier qui ne nécessite pas un échange d'informations confidentielles entre lesdits utilisateurs lorsqu'un utilisateur souhaite autoriser un autre à accéder à ladite base.

Il est connu de l'état de l'art les documents D1 "Practical personalized genomics in the encrypted domain "propose une solution aux défis du partage des données de séquences génomiques et de l'interrogation des données sur les séquences génomiques sur un serveur nuage dans des scénarios de médecine personnalisée. Il développe une solution de médecine personnalisée qui préserve la confidentialité, qui est sécurisée et efficace. La solution proposée utilise le transchiffrement homomorphe basé sur le chiffrement de flux dans un serveur nuage et montre l'efficacité de la solution de transchiffrement dans le scénario de médecine personnalisée." propose une solution aux défis du partage des données de séquences génomiques et de l'interrogation des données sur les séquences génomiques sur un serveur nuage dans des scénarios de médecine personnalisée. Il développe une solution de médecine personnalisée qui préserve la confidentialité, qui est sécurisée et efficace. La solution proposée utilise le transchiffrement homomorphe basé sur le chiffrement de flux dans un serveur nuage et montre l'efficacité de la solution de transchiffrement dans le scénario de médecine personnalisée. D2 "Practical personalized genomics in the encrypted domain"

### Présentation de l'invention

La présente invention est définie par une méthode d'interrogation confidentielle de la présence d'un enregistrement dans une base de données hébergée par un serveur, lesdits enregistrements étant stockés dans la base de données sous forme d'empreintes numériques, chaque empreinte numérique étant obtenue par hachage d'un enregistrement au moyen d'une fonction publique de hachage et chaque ligne de la base de données contenant les empreintes numériques partageant leurs $m > 1$ premiers bits, ladite méthode d'interrogation confidentielle étant originale en ce que :

- un premier utilisateur dispose d'une clé symétrique de chiffrement par flot et un second utilisateur dispose d'un cryptosytème homomorphe au moins additif ;
- les lignes de la base de données sont chiffrées au moyen dudit chiffrement par flot par addition de masques ayant chacun la taille d'une ligne de la base de données ;
- le premier utilisateur autorise l'accès à la base de données au second utilisateur en chiffrant les masques inverses au moyen de la clé publique dudit cryptosystème homomorphe et en transmettant les masques inverses ainsi chiffrés au serveur;
- les lignes de la base de données sont transchiffrées dans le domaine homomorphe par addition aux dites lignes des masques inverses ainsi chiffrés ;
- le second utilisateur calcule l'empreinte numérique de l'enregistrement au moyen de ladite fonction publique de hachage et en déduit une valeur entière, $q_m$, correspondant aux m premiers bits;
- le second utilisateur construit une requête sous la forme d'un premier vecteur de taille $2^m$ constitué d'un chiffré homomorphe de la valeur « 1 » en position $q_m$ et de chiffrés homomorphes de la valeur « 0 » aux autres positions, la requête étant transmise au serveur ;
- le serveur évalue dans le domaine homomorphe le produit scalaire entre le premier vecteur et un second vecteur de taille $2^m$ constitué par les lignes chiffrées de la base de données, le résultat étant transmis comme réponse au second utilisateur;
- le second utilisateur déchiffre ladite réponse au moyen de la clé privée de son cryptosystème homomorphe et en déduit le contenu en clair de la ligne $q_m$ de la base de données ;
- le second utilisateur recherche si l'empreinte numérique de l'enregistrement se trouve parmi les empreintes numériques de la ligne $q_m$ ainsi obtenue.

Le chiffrement par flot pourra utiliser une primitive de chiffrement choisie par exemple parmi AES-CTR, Trivium et Grain.

La fonction publique de hachage cryptographique pourra être SHA-3.

Selon un mode avantageux de réalisation, le cryptosystème homomorphe est un chiffrement homomorphe additif sans être FHE.

Le chiffrement homomorphe additif pourra utiliser de préférence un cryptosystème de Paillier de clé publique ($g$, $n$) avec $n = pq$ où $p$, $q$ sont deux nombres premiers.

Dans ce cas, le serveur retourne comme réponse un premier et un second chiffrés stockés à la ligne $q_m$, le second utilisateur effectuant un déchiffrement de chacun des premier et second chiffrés au moyen de la clé privée de son cryptosystème homomorphe, puis effectue un déchiffrement au moyen de cette même clé privée des résultats ainsi obtenus après les avoir concaténés.

Selon une variante, le chiffrement homomorphe additif utilise une pluralité $N$ de chiffrés de « 0 » par un chiffrement de Pallier, $h_i$, $i = 1,..,N$, le chiffrement homomorphe additif d'un entier $\mu$ étant obtenu par :

$$c = g^\mu \prod_{i=1}^{N} max(1, u_i h_i) \, mod \, n^2$$

où $u_i$, $i = 1,..,N$ sont des bits aléatoires sélectionnant lesdits chiffrés de « 0 ».

Avantageusement, les chiffrés de « 0 » sont calculés une fois pour toutes et stockés par le second utilisateur.

Le transchiffrement des lignes de la base de données peut être réalisé une fois pour toutes par le serveur lorsque le second utilisateur a été autorisé à interroger la base de données par le premier utilisateur. Alternativement, le transchiffrement des lignes de la base de données est réalisé de manière dynamique par le serveur à chaque interrogation du second utilisateur.

## Brève description des dessins

D'autres caractéristiques et avantages de l'invention apparaîtront à la lecture d'un mode de réalisation préférentiel de l'invention, fait en référence aux figures jointes parmi lesquelles :

[Fig. 1] représente de manière schématique le contexte d'application de la présente invention ;
[Fig. 2] représente de manière schématique la structure de la base de données utilisée dans la Fig. 1 ;
[Fig. 3] représente de manière schématique une méthode d'interrogation d'une base de données selon un mode de réalisation de la présente invention ;

**Description des modes de réalisation**

Nous considérons tout d'abord un cas d'usage représentatif du contexte d'application de la présente invention. Dans ce contexte, un client (encore dénommé utilisateur) peut interroger une base de données hébergée par un serveur distant. Pour ce faire, le client envoie une requête ayant en argument un enregistrement susceptible d'être présent dans la base et reçoit en retour une information indiquant si cet enregistrement est effectivement présent ou non. De manière plus générale, plusieurs clients sont susceptibles d'interroger la base de données et recevoir en retour un indicateur de la présence des enregistrements recherchés. Un ou plusieurs administrateurs peuvent en outre procéder à des ajouts ou des suppressions d'enregistrements dans la base. Les postes clients et les postes administrateurs forment collectivement le domaine client. Le serveur distant pouvant lui-même faire appel à des grappes de serveurs distribués dans le Cloud, les serveurs qui hébergent la base de données forment collectivement le domaine serveur.

Dans le cas d'usage considéré, la base de données, bien qu'hébergée dans le domaine serveur reste la propriété du domaine client. En d'autres termes, la confidentialité des données présentes dans la base doit être garantie vis-à-vis du serveur tout en permettant aux clients du domaine client d'interroger cette dernière de manière confidentielle. Les contraintes de confidentialité à respecter entre le domaine client et le domaine serveur peuvent être énoncées comme suit :

- confidentialité des enregistrements stockés dans la base de données hébergée dans le domaine serveur vis-à-vis du serveur ;
- confidentialité des requêtes issues du domaine client vis-à-vis du serveur ;
- confidentialité des réponses (indicateurs de présence des enregistrements) renvoyées aux clients, vis-à-vis du serveur.

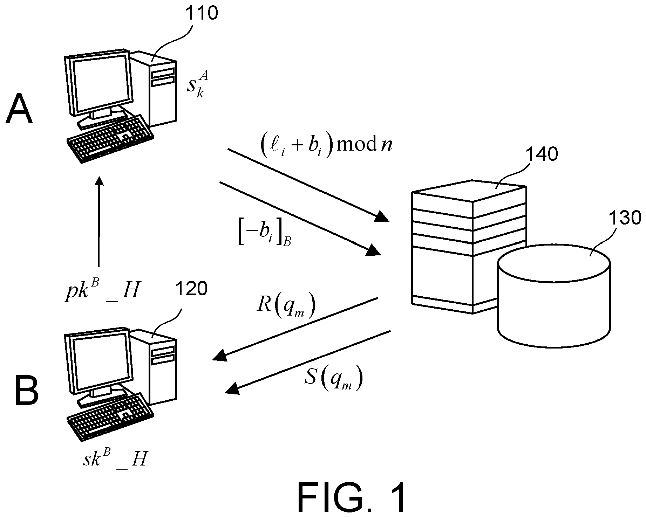

La Fig. 1 représente de manière schématique un cas d'usage illustrant le contexte d'application de la présente invention.

Dans ce cas d'usage, un premier utilisateur A disposant d'un terminal 110 souhaite permettre à un second utilisateur B, disposant d'un terminal 120, d'interroger, de manière confidentielle, une base de données, 130, hébergée par un serveur distant, 140. Nous supposerons que les différents acteurs (utilisateurs et serveur) sont curieux mais semi-honnêtes, c'est-à-dire suivent le protocole qui leur est imposé.

Les enregistrements peuvent comporter une pluralité de champs, et sont composés par exemple de données alphanumériques. Par exemple, chaque enregistrement pourra comprendre les nom, prénom, genre, date et lieu de naissance, adresse d'une personne. Il est essentiel de noter que ces informations ne sont toutefois pas stockées telles quelles dans la base mais seulement sous la forme d'empreintes numériques. A la différence de l'art antérieur, ces empreintes sont obtenues par une fonction de hachage cryptographique publique, par exemple la fonction de hachage SHA-3. On entend par fonction de hachage publique une fonction de hachage n'utilisant pas d'élément confidentiel tel qu'une clé secrète.

L'utilisateur A ou bien un administrateur du domaine client pourra calculer les empreintes numériques des enregistrements à stocker. Les empreintes numériques ont toutes la même taille $T$, par exemple 256 ou 512 bits. On pourra ne conserver qu'une partie des bits de l'empreinte numérique fournie par la fonction de hachage, par exemple 64 bits. Par souci de simplification, on assimilera ces empreintes réduites à des empreintes numériques au sens précédent, la réduction de taille de l'empreinte pouvant être prise en compte dans la fonction de hachage.

La base de données est « orientée lignes » et les empreintes numériques sont avantageusement groupées par lignes. Les différentes lignes sont de taille $L$, autrement dit chaque ligne peut comprendre jusqu'à $L$ empreintes. Le cas échéant, des bits de bourrage pourront être prévus pour compléter une ligne incomplète. Le groupement des empreintes est réalisé de sorte que les empreintes d'une même ligne possèdent les mêmes m premiers (ou alternativement derniers) bits, autrement dit les empreintes représentent des valeurs hachées qui collisionnent sur leurs $m$ premiers bits, c'est-à-dire, de manière équivalente ; qu'elles appartiennent à une même classe de collision sur ces $m$ premiers bits.

On choisit de préférence la valeur m telle que $K > 2^m$ (voire $K \gg 2^m$) et $K < 2^m L$ où $K$ est le nombre total d'enregistrements dans la base. La première condition permet d'avoir des classes de collision qui ne soient pas réduites à des singletons, autrement dit d'obtenir une valeur de $L$ suffisamment grande. La seconde condition permet de classer toutes les empreintes de la base.

La base de données est constituée de $2^m$ lignes (dont certaines peuvent être vides), le contenu de chaque ligne $i$ = 1,..,$2^m$ pouvant être représenté par un entier $\ell_i$ de $$\mathbb{Z}_n = \mathbb{Z}/n\mathbb{Z}$$ avec $log_2\, n \geq LT$. Pour des raisons explicitées plus loin, on choisira avantageusement $n = pq$ où $p$ et $q$ sont des nombres premiers. Les lignes peuvent être considérées comme des entiers prenant leurs valeurs dans l'ensemble {0,...,$n$ - 1}.

De manière originale, chaque entier $\ell_i$ est chiffré à l'aide d'un chiffrement par flot (*stream cipher*) à l'aide d'une clé symétrique appartenant à l'utilisateur A. On rappelle qu'un chiffrement par flot est un chiffrement lequel le message à chiffrer est simplement additionné à une séquence de bits engendrée à partir d'une clé symétrique, notée ici $s_k^A$. On pourra utiliser à cet effet des primitives de chiffrement connues de l'homme du métier telles que AES-CTR (*Advanced Encryption Standard in Counter Mode*), Grain, Trivium, etc.

Quel que soit l'algorithme de chiffrement par flot retenu, les mots $\ell_i$ des lignes $i$ = 1,..,$2^m$ sont chiffrés (ou masqués) par l'utilisateur A en calculant les sommes $(\ell_i + b_i) \bmod n$, $i$ = 1,..,$2^m$ où les entiers $b_i$ sont extraits de la séquence de bits générée par $s_k^A$. Il convient de noter que la séquence des mots $b_i$, dite également flux de clé, n'a pas besoin d'être stockée par l'utilisateur A étant donné qu'elle peut être régénérée à tout moment à partir de la clé symétrique $s_k^A$. Les entiers $b_i$ sont encore appelés masques car ils permettent de rendre confidentiel le contenu de la base de données vis-à-vis du serveur.

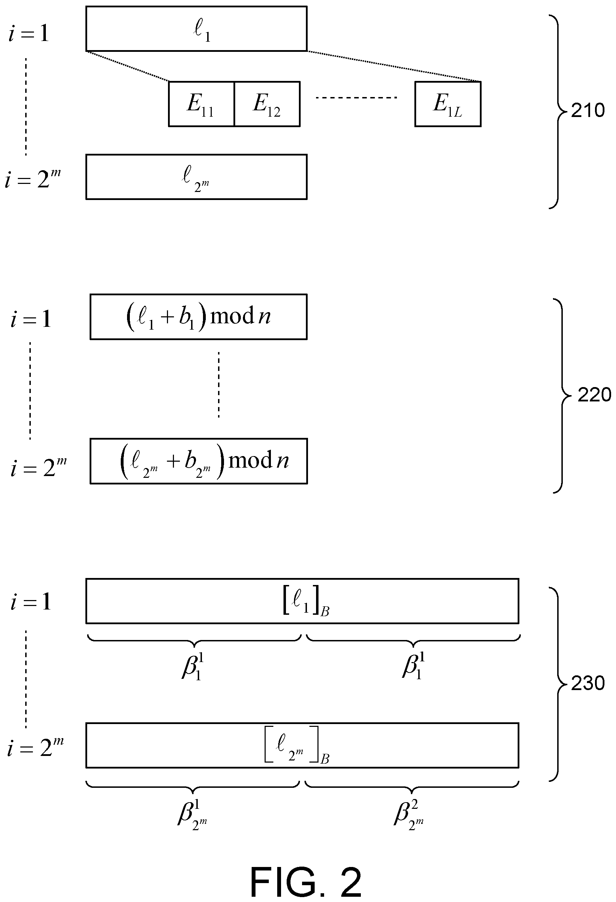

La Fig. 2 illustre de manière schématique la structure de la base de données utilisée dans la Fig. 1.

On a représenté en 210 la structure de la base avant chiffrement par flot. Chacune des lignes $i$ = 1,..,$2^m$ est formée par un mot $\ell_i$ de taille $log_2\ n$ bits et comprend au plus $L$ empreintes numériques $E_{ij}, j$ = 1,..,$L$ de taille $T$.

La structure de la base après chiffrement par flot est représentée en 220. Elle comprend le même nombre de lignes, chaque ligne $i$ = 1,..,$2^m$ étant de taille $log_2\ n$ et formée par le mot masqué $(\ell_i + b_i) \bmod n$.

L'idée à la base de la présente invention est de transchiffrer les lignes ainsi chiffrées au moyen d'un cryptosystème homomorphe additif (au moins).

On rappelle qu'un chiffrement homomorphe permet d'effectuer des opérations (en pratique des opérations arithmétiques d'addition ou de multiplication) sur des données sans jamais les dévoiler. Plus précisément, un chiffrement homomorphe additif est un chiffrement à clé asymétrique $Enc_{pk\_H}$ (de clé publique $pk\_H$) vérifiant la propriété suivante :

$$Enc_{pk\_H}:$$

$$\Omega \to \Gamma$$

$$Dec_{sk\_H}\big[Enc_{pk\_H}(a) \oplus Enc_{pk\_H}(b)\big] = a + b \tag{1}$$

où $\Omega$ est l'espace des messages clairs (dit plus simplement espace des clairs) et $\Gamma$ est l'espace des messages chiffrés (dit plus simplement espace des chiffrés), + une opération additive dans l'espace des clairs conférant à $\Omega$ une structure de groupe, $\oplus$ une opération d'addition interne dans l'espace des chiffrés conférant à $\Gamma$ une structure de groupe. On comprend ainsi que l'application de $(\Omega, +)$ dans $(\Gamma, \oplus)$ est un homomorphisme de groupes. $Dec_{sk\_H}$ est la fonction de déchiffrement correspondant à $Enc_{pk\_H}$ (où $sk\_H$ est la clé secrète de l'utilisateur).

Il résulte de l'expression (1) qu'il est possible d'effectuer une opération additive entre deux clairs ($a$, $b$) à partir d'une opération correspondante entre leurs chiffrés ($Enc_{pk\_H}(a)$, $Enc_{pk\_H}(b)$).

Un chiffrement homomorphe additif dispose d'une opération de multiplication externe de $\Omega \times \Gamma$ dans $\Gamma$, notée $\otimes_{ext}$, telle que

$$Dec_{sk\_H}\big[a \otimes_{ext} Enc_{pk\_H}(b)\big] = ab \tag{2-1}$$

Cette opération d'addition interne n'est autre qu'une conséquence de l'expression (1) dans la mesure où $a \otimes_{ext}$ signifie que l'addition interne est appliquée a fois.

Autrement dit, l'opération de multiplication externe permet de multiplier un clair par un chiffré pour obtenir un chiffré. On notera que cette opération réalise une absorption dans le domaine homomorphe.

De manière similaire, on peut toujours définir une opération d'addition externe de $\Omega \times \Gamma$ dans $\Gamma$, notée $\otimes_{ext}$, au moyen de :

$$a \oplus_{ext} Enc_{pk\_H}(b) = Enc_{pk\_H}(a) \oplus Enc_{pk\_H}(b) \tag{2-2}$$

auquel cas :

$$Dec_{sk\_H}\big[a \oplus_{ext} Enc_{pk\_H}(b)\big] = a + b \qquad\qquad (2\text{-}3)$$

Dans certains cas, le cryptosystème dispose nativement d'une opération d'addition externe. C'est notamment et avantageusement le cas pour le cryptosystème de Pallier.

Sans perte de généralité, nous supposerons dans la suite que le cryptosystème homomorphe additif est un cryptosystème de Paillier.

On suppose dans la suite que chaque utilisateur dispose de son propre cryptosystème homomorphe additif. On note ($sk^A\_H$, $pk^A\_H$) le couple de clés privée - clé publique du cryptosystème homomorphe de l'utilisateur A et ($sk^B\_H$, $pk^B\_H$) celui de B.

Le transchiffrement est une technique cryptographique permettant de passer de données chiffrées par un premier cryptosystème aux mêmes données chiffrées par un second cryptosystème (nécessairement homomorphe), sans passer par une étape intermédiaire de déchiffrement dans l'espace des clairs.

Dans le cas présent, l'opération de transchiffrement permet de passer d'un chiffré par flot à un chiffré dans le domaine homomorphe. Plus précisément, si l'on note $[x]_B$ le chiffré homomorphe de $x$ au moyen de la clé publique $pk^B\_H$, on obtient :

$$(\ell_i + b_i) \oplus_{ext} [-b_i]_B = [\ell_i + b_i - b_i]_B = [\ell_i]_B \qquad\qquad (3)$$

c'est-à-dire le chiffré homomorphe de la ligne en question.

En pratique, lorsque l'utilisateur A souhaite autoriser l'utilisateur B à interroger sa base de données, il chiffre les masques inverses, c'est-à-dire les mots $-b_i$ $i = 1,..,2^m$ (les masques $b_i$ étant issus du flux de clé), au moyen de la clé publique du cryptosystème homomorphe additif de B puis les transmet au serveur qui réalise l'opération de démasquage (3) sur les lignes de la base de données. Cette opération de démasquage dans le domaine homomorphe peut être réalisée une fois pour toutes en mode « hors-ligne) ou bien au contraire, à la volée, à chaque fois que l'utilisateur B demande à l'utilisateur A d'accéder à la base de données (détenue par A). On notera que l'opération (3) protège la confidentialité des données vis-à-vis du serveur car ce dernier n'a accès ni au premier terme de l'expression (en raison du masquage) ni au second en raison du chiffrement homomorphe.

Selon une variante de réalisation, en lieu et place de l'opération (3), le serveur peut surchiffrer les valeurs ($\ell_i + b_i$) de la base à l'aide de la clé publique $pk^B\_H$ pour obtenir le chiffré homomorphe $[\ell_i + b_i]_B$. Le chiffré homomorphe de la ligne $i$ peut alors être obtenu au moyen de l'opération d'addition interne :

$$(\ell_i + b_i) \oplus_{ext} [-b_i]_B = [\ell_i + b_i - b_i]_B = [\ell_i]_B \qquad\qquad (4)$$

Revenant à la Fig. 2, on a représenté en 230 la structure de la base après transchiffrement. On remarque que la base est toujours constituée de lignes $i = 1,..,2^m$ mais celles-ci sont ici de taille double (les chiffrés ont une taille double de celle des clairs) et contiennent respectivement $[\ell_i]_B, i = 1,..,2^m$. Chaque chiffré $[\ell_i]_B$ est par conséquent constitué de deux mots de $log_2(n)$, notés $\beta_i^1$ et $\beta_i^2$, stockés à la ligne $i$.

L'utilisateur B peut alors transmettre au serveur une requête portant sur la présence d'un enregistrement donné, selon un protocole de type PIR. Pour ce faire, l'utilisateur B calcule l'empreinte numérique de l'enregistrement recherché au moyen de la fonction de hachage publique ayant servi à la construction de la base. On note $q$ la valeur entière associée à l'empreinte numérique et $q_m$ la valeur entière associée aux $m$ premiers bits de cette empreinte. La requête est formée par un vecteur $\boldsymbol{u}$ de $2^m$ chiffrés avec un chiffré de la valeur « 1 » en position $q_m$, le reste étant constitué par des chiffrés de la valeur «0». Autrement dit :

$$Dec_{sk^B\_H}(u_i) = \delta_{i,q_m} \qquad\qquad (5)$$

où $u_i$ est le $i^{ème}$ élément du vecteur $\boldsymbol{u}$ et $\delta$ est le symbole de Kronecker.

Pour tout $i = 1,..,2^m$, le serveur calcule $u_i \otimes_{ext} \beta_i^1$ et $u_i \otimes_{ext} \beta_i^2$, sans prendre en compte le fait que les valeurs $\beta_i^1$ et $\beta_i^2$ sont des portions de chiffrés, puis calcule les sommes suivantes dans l'espace homomorphe :

$$\overset{i=1}{\underset{2^m}{\bigoplus}} (u_i \otimes_{ext} \beta_i^1) = [\beta_{q^m}^1]_B \qquad (6\text{-}1)$$

$$\overset{i=1}{\underset{2^m}{\bigoplus}} (u_i \otimes_{ext} \beta_i^2) = [\beta_{q^m}^2]_B \qquad (6\text{-}2)$$

en application des expressions (1) et (2). On notera que ces expressions correspondent à une évaluation dans le domaine homomorphe d'un produit scalaire dans le domaine des clairs.

Les chiffrés homomorphe $[\beta_{q^m}^1]_B$ et $[\beta_{q^m}^2]_B$ forment la réponse qui est retournée à l'utilisateur B. On comprendra que le serveur ne peut déterminer en aucun cas la ligne ($q_m$) qui a répondu ni a fortiori le contenu de la réponse.

L'utilisateur B déchiffre alors $[\beta_{q^m}^1]_B$ et $[\beta_{q^m}^2]_B$ au moyen de sa clé privée, $sk^B\_H$, puis concatène les valeurs obtenues $\beta_{q^m}^1$ et $\beta_{q^m}^2$ pour former le chiffré de la ligne :

$$[\ell_{q^m}]_B = \beta_{q^m}^1 | \beta_{q^m}^2 \qquad (7)$$

qui est, à son tour, déchiffré avec la clé privée $sk^B\_H$ pour fournir la liste des empreintes $E_{q^mj}$, $j = 1,..,L$ initialement stockées dans la ligne $q^m$ de la base.

L'utilisateur peut enfin vérifier si l'empreinte numérique de l'enregistrement recherché fait partie de la liste des empreintes $E_{q^mj}$, $j = 1,..,L$ ainsi obtenues.

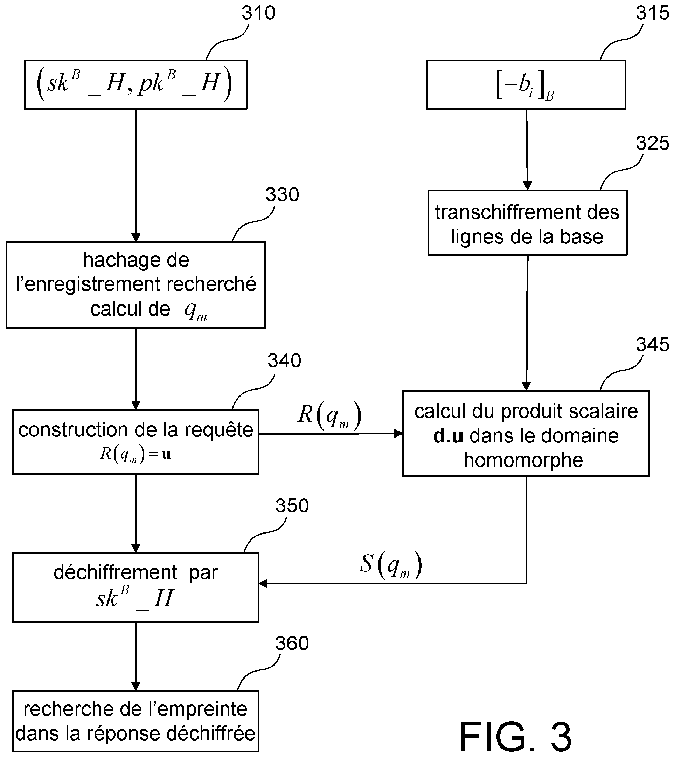

La Fig. 3 représente de manière schématique une méthode d'interrogation d'une base de données selon un premier mode de réalisation de la présente invention.

La partie gauche de la figure correspond au terminal de l'utilisateur B, et la partie droite au serveur hébergeant la base de données. On suppose que la base de données a été préalablement chiffrée au moyen d'un flux de clé généré à partir d'une clé symétrique de A, $s_k^A$. Plus précisément, chaque ligne $i$ de la base a été préalablement chiffrée au moyen d'un mot $b_i$ issu de ce flux de clé.

Le terminal B dispose d'un cryptosystème homomorphe additif ($sk^B\_H,pk^B\_H$) en 310 et le serveur hébergeant de la base de données a reçu de l'utilisateur A, en 315, les chiffrés homomorphe $[-b_i]_B$ obtenus par chiffrement à partir de la clé publique de B, $pk^B\_H$.

A l'étape 325, le serveur effectue un transchiffrement des lignes de la base de données au moyen de $(\ell_i + b_i) \otimes_{ext}$ $[-b_i]_B = [\ell_i]_B$, $i = 1,.., 2^m$. Ce transchiffrement transforme les lignes chiffrées par un chiffrement symétrique de clé $s_k^A$ en des lignes chiffrées par un chiffrement homomorphe additif au moyen de la clé publique $pk^B\_H$.

A l'étape 330, l'utilisateur B recherchant dans la base un enregistrement donné, calcule son empreinte numérique au moyen de la fonction de hachage publique ayant servi à la constitution de la base, et en déduit la valeur entière $q_m$ associée aux m premiers bits de cette empreinte.

A l'étape 340, l'utilisateur B construit une requête $R(q_m)$ sous la forme d'un vecteur $\boldsymbol{u}$ de $2^m$ chiffrés avec un chiffré homomorphe de la valeur « 1 » en position $q_m$, les autres éléments de ce vecteur étant des chiffrés homomorphes de la valeur «0 » :

$$\boldsymbol{u} = ([0]_B, \ldots, [0]_B, [1]_B, [0]_B, \ldots, [0]_B) \qquad (8)$$

La requête $R(q_m)$ est alors transmise au serveur.

A l'étape 345, le serveur évalue dans le domaine homomorphe le produit scalaire entre le vecteur $\boldsymbol{u}$ et le vecteur $\boldsymbol{d}$ de taille $2^m$ constitué par les lignes chiffrées $[\ell_i]_B$, $i = 1,..,2^m$ :

$$\boldsymbol{d} = ([\ell_1]_B, \ldots, [\ell_{2^m}]_B) \qquad (9)$$

et renvoie le résultat $S(q_m)$ à l'utilisateur B. Dans le cas où le cryptosystème homomorphe additif est un cryptosystème de Paillier, le résultat pourra être composé de deux chiffrés homomorphes stockés à la ligne $q_m$, $\left[\beta_{q^m}^1\right]_B$ et $\left[\beta_{q^m}^2\right]_B$, comme expliqué plus haut.

A l'étape 350, l'utilisateur B effectue un déchiffrement de la réponse reçue, au moyen de sa clé privée $sk^B\_H$ pour obtenir le contenu de la ligne $q_m$ en clair, soit $\ell_{q^m}$. On rappelle que, dans le cas d'un cryptosystème de Paillier, cette étape comprend trois étapes de déchiffrement : déchiffrement des chiffrés $\left[\beta_{q^m}^1\right]_B$ et $\left[\beta_{q^m}^2\right]_B$, puis déchiffrement des résultats concaténés $\left[\ell_{q^m}\right]_B = \beta_{q^m}^1 | \beta_{q^m}^2$. Dans le cas d'un cryptosystème totalement homomorphe ou FHE (*Fully Homomorphic Encryption*), une seule opération de déchiffrement est nécessaire pour l'utilisateur B, la première opération pouvant être réalisée dans le domaine homomorphe par le serveur selon une technique dite de *bootstrapping*.

Enfin, à l'étape 360, l'utilisateur B détermine si l'empreinte numérique recherchée se trouve parmi les empreintes $E_{q^m j}$, $j = 1,..,L$ de la ligne $\ell_{q^m}$.

Bien que la présente invention ait été décrite dans le cas d'un cryptosystème homomorphe additif, l'homme du métier comprendra que celle-ci s'applique *a fortiori* dans le cas d'un cryptosystème FHE. On rappelle qu'un chiffrement FHE est un homomorphisme de groupe à la fois au regard d'une loi d'addition interne et d'une loi de multiplication interne. Le chiffrement homomorphique (additif ou FHE) pourra être basé sur un schéma LWE (*Learning With Errors*), de manière connue en soi.

De manière générale, un cryptosystème homomorphe additif sera préféré, car conduisant à des calculs plus simples que dans le cas d'un cryptosytème FHE.

Selon un premier exemple de réalisation déjà mentionné, le cryptosystème homomorphe additif pourra un cryptosystème de Paillier.

On rappelle que la clé publique d'un cryptosystème de Paillier est défini par un couple d'entiers (*g, n*) et que le chiffré d'un message $\mu \in \mathbb{Z}_n$ μ est donné par :

$$c = g^\mu r^n \, mod \, n^2$$

$$\text{où } r \in \mathbb{Z}_n \text{ est un aléa} \tag{10}$$

On notera que le calcul du produit scalaire à l'étape 345 ne fait appel qu'à des chiffrés de « 1 » et de « 0 » et que par conséquent le coût du chiffrement est essentiellement dominé par le calcul du terme *$r^n$ mod $n^2$*, et est donc généralement élevé en raison pour de grandes valeurs de l'exposant *n*. On rappelle que *n = pq* où *p,q* sont deux nombres premiers de grande taille.

Avantageusement, on pourra alternativement opter pour un chiffrement plus simple, en précalculant des chiffrés de « 0 » avec *N* différentes valeurs d'aléa, soit :

$$h_1 = r_1 \, mod \, n^2$$

$$\vdots$$

$$h_N = r_N \, mod \, n^2$$

$$\tag{11}$$

le chiffré d'un message $\mu \in \mathbb{Z}_n$ étant donné par :

$$c = g^\mu \prod_{i=1}^N max(1, u_i h_i) \, mod \, n^2 \tag{12}$$

où $u_i$, $i = 1,..,N$ sont des bits aléatoires visant à sélectionner des chiffrés de « 0 ». On comprendra que l'expression *max*(1, $u_i h_i$) laisse le produit invariant lorsque le chiffré de « 0 », $h_i$, n'est pas sélectionné. L'opération (13) est donc l'équivalent dans le domaine homomorphe à l'addition au message $\mu$ d'un nombre aléatoire $v = \sum_{i=1}^N u_i$ de « 0 ». Les valeurs $h_i$, $i = 1,...,N$ peuvent être calculées une fois pour toutes et stockées par le second utilisateur. Ces valeurs $h_i$ peuvent même être publiques. Dans tous les cas, le chiffrement homomorphe additif consiste simplement à sélectionner des bits $u_i$ et à

effectuer le calcul de l'expression (13), ce dernier ne requérant pas d'exponentiation modulaire. Bien entendu, les bits $u_i$ peuvent être, quant à eux, à usage unique et n'ont donc pas besoin d'être stockés par le second utilisateur.

**Revendications**

1. Méthode d'interrogation confidentielle de la présence d'un enregistrement dans une base de données hébergée par un serveur, lesdits enregistrements étant stockés dans la base de données sous forme d'empreintes numériques, chaque empreinte numérique étant obtenue par hachage d'un enregistrement au moyen d'une fonction publique de hachage et chaque ligne de la base de données contenant les empreintes numériques partageant leurs $m > 1$ premiers bits, **caractérisée en ce que** :

   - un premier utilisateur dispose d'une clé symétrique de chiffrement par flot et un second utilisateur dispose d'un cryptosytème homomorphe au moins additif (310) ;
   - les lignes de la base de données sont chiffrées au moyen dudit chiffrement par flot par addition de masques ayant chacun la taille d'une ligne de la base de données ;
   - le premier utilisateur autorise l'accès à la base de données au second utilisateur en chiffrant les masques inverses au moyen de la clé publique dudit cryptosystème homomorphe et en transmettant les masques inverses ainsi chiffrés au serveur (315) ;
   - les lignes de la base de données sont transchiffrées (325) dans le domaine homomorphe par addition aux dites lignes des masques inverses ainsi chiffrés ;
   - le second utilisateur calcule l'empreinte numérique de l'enregistrement au moyen de ladite fonction publique de hachage et en déduit une valeur entière, $q_m$, correspondant aux $m$ premiers bits (330) ;
   - le second utilisateur construit une requête sous la forme d'un premier vecteur de taille $2^m$ constitué d'un chiffré homomorphe de la valeur « 1 » en position $q_m$ et de chiffrés homomorphes de la valeur « 0 » aux autres positions, la requête étant transmise au serveur (340) ;
   - le serveur évalue dans le domaine homomorphe le produit scalaire entre le premier vecteur et un second vecteur de taille $2^m$ constitué par les lignes chiffrées de la base de données, le résultat étant transmis comme réponse au second utilisateur (345);
   - le second utilisateur déchiffre ladite réponse au moyen de la clé privée de son cryptosystème homomorphe et en déduit le contenu en clair de la ligne $q_m$ de la base de données (350) ;
   - le second utilisateur recherche si l'empreinte numérique de l'enregistrement se trouve parmi les empreintes numériques de la ligne $q_m$ ainsi obtenue (360).

2. Méthode d'interrogation confidentielle de la présence d'un enregistrement dans une base de données selon la revendication 1 **caractérisée en ce que** le chiffrement par flot utilise une primitive de chiffrement choisie parmi AES-CTR, Trivium et Grain.

3. Méthode d'interrogation confidentielle de la présence d'un enregistrement dans une base de données selon la revendication 1 ou 2, **caractérisée en ce que** la fonction publique de hachage cryptographique est SHA-3.

4. Méthode d'interrogation confidentielle de la présence d'un enregistrement dans une base de données selon l'une des revendications précédentes, **caractérisée en ce que** le cryptosystème homomorphe est un chiffrement homomorphe additif sans être FHE.

5. Méthode d'interrogation confidentielle de la présence d'un enregistrement dans une base de données selon la revendication 4, **caractérisée en ce que** le chiffrement homomorphe additif utilise un cryptosystème de Paillier de clé publique $(g, n)$ *avec* $n = pq$ où $p$, $q$ sont deux nombres premiers.

6. Méthode d'interrogation confidentielle de la présence d'un enregistrement dans une base de données selon la revendication 5, **caractérisée en ce que** le serveur retourne comme réponse un premier et un second chiffrés stockés à la ligne $q_m$, le second utilisateur effectuant un déchiffrement de chacun des premier et second chiffrés au moyen de la clé privée de son cryptosystème homomorphe, puis effectue un déchiffrement au moyen de cette même clé privée des résultats ainsi obtenus après les avoir concaténés.

7. Méthode d'interrogation confidentielle de la présence d'un enregistrement dans une base de données selon la revendication 5, **caractérisée en ce que** le chiffrement homomorphe additif utilise une pluralité $N$ de chiffrés de « 0 » par un chiffrement de Pallier, $h_i$, $i = 1,..,N$, le chiffrement homomorphe additif d'un entier $\mu$ étant obtenu par :

$$c = g^{\mu} \prod_{i=1}^{N} max(1, u_i h_i) \, mod \, n^2$$

où $u_i$, $i = 1,..,N$ sont des bits aléatoires sélectionnant lesdits chiffrés de « 0 ».

8. Méthode d'interrogation confidentielle de la présence d'un enregistrement dans une base de données selon la revendication 7, **caractérisée en ce que** les chiffrés de « 0 » sont calculés une fois pour toutes et stockés par le second utilisateur.

9. Méthode d'interrogation confidentielle de la présence d'un enregistrement dans une base de données selon l'une des revendications précédentes, **caractérisée en ce que** le transchiffrement des lignes de la base de données est réalisée une fois pour toutes par le serveur lorsque le second utilisateur a été autorisé à interroger la base de données par le premier utilisateur.

10. Méthode d'interrogation confidentielle de la présence d'un enregistrement dans une base de données selon l'une des revendications 1 à 8, **caractérisée en ce que** le transchiffrement des lignes de la base de données est réalisé de manière dynamique par le serveur à chaque interrogation du second utilisateur.

**Patentansprüche**

1. Verfahren zur vertraulichen Abfrage des Vorhandenseins eines Datensatzes in einer von einem Server gehosteten Datenbank, wobei die Datensätze in der Datenbank in Form von digitalen Fingerabdrücken gespeichert werden, wobei jeder digitale Fingerabdruck durch Hashing eines Datensatzes mit Hilfe einer öffentlichen Hashing-Funktion erhalten wird und jede Zeile der Datenbank, die die digitalen Fingerabdrücke enthält, ihre ersten m > 1 Bits gemeinsam nutzt, **dadurch gekennzeichnet, dass**:

   - ein erster Benutzer über einen symmetrischen Schlüssel für die Floatverschlüsselung verfügt und ein zweiter Benutzer über ein mindestens additives (310) homomorphes Kryptosystem verfügt;
   - die Zeilen der Datenbank mit Hilfe der Flussverschlüsselung verschlüsselt werden, indem Masken addiert werden, von denen jede die Größe einer Zeile der Datenbank hat;
   - der erste Benutzer dem zweiten Benutzer den Zugriff auf die Datenbank gestattet, indem er die inversen Masken mit Hilfe des öffentlichen Schlüssels des homomorphen Kryptosystems verschlüsselt und die so verschlüsselten inversen Masken an den Server (315) überträgt;
   - die Zeilen der Datenbank im homomorphen Bereich tranchiert (325) werden, indem zu den Zeilen die so verschlüsselten inversen Masken addiert werden;
   - der zweite Benutzer den digitalen Fingerabdruck des Datensatzes mit Hilfe des Mittels der öffentlichen Hash-Funktion berechnet und daraus einen ganzzahligen Wert, $q_m$, ableitet, der den ersten m Bits (330) entspricht;
   - der zweite Benutzer eine Anfrage in Form eines ersten Vektors der Größe $2^m$ erstellt, der aus einer homomorphen Verschlüsselung des Werts "1" an der Position $q_m$ und homomorphen Verschlüsselungen des Werts "0" an den anderen Positionen besteht, wobei die Anfrage an den Server (340) übermittelt wird;
   - der Server in der homomorphen Domäne das Skalarprodukt zwischen dem ersten Vektor und einem zweiten Vektor der Größe $2^m$ auswertet, der aus den verschlüsselten Zeilen der Datenbank besteht, wobei das Ergebnis als Antwort an den zweiten Benutzer (345) übermittelt wird;
   - der zweite Benutzer die Antwort mit Hilfe des privaten Schlüssels seines homomorphen Kryptosystems entschlüsselt und daraus den Klartextinhalt der Zeile $q_m$ in der Datenbank (350) ableitet;
   - der zweite Benutzer sucht, ob sich der digitale Fingerabdruck des Datensatzes unter den digitalen Fingerabdrücken in der so erhaltenen Zeile $q_m$ befindet (360).

2. Verfahren zur vertraulichen Abfrage des Vorhandenseins eines Datensatzes in einer Datenbank nach Anspruch 1, **dadurch gekennzeichnet, dass** die Floatverschlüsselung eine Verschlüsselungsprimitive verwendet, die aus AES-CTR, Trivium und Grain ausgewählt wird.

3. Verfahren zur vertraulichen Abfrage des Vorhandenseins eines Datensatzes in einer Datenbank nach Anspruch 1 oder 2, **dadurch gekennzeichnet, dass** die öffentliche kryptografische Hashfunktion SHA-3 ist.

4. Verfahren zur vertraulichen Abfrage des Vorhandenseins eines Datensatzes in einer Datenbank nach einem der vorstehenden Ansprüche, **dadurch gekennzeichnet, dass** das homomorphe Kryptosystem eine additive homomorphe Verschlüsselung ist, ohne FHE zu sein.

5. Verfahren zur vertraulichen Abfrage des Vorhandenseins eines Datensatzes in einer Datenbank nach Anspruch 4, **dadurch gekennzeichnet, dass** die additive homomorphe Verschlüsselung ein Paillier-Kryptosystem des öffentlichen Schlüssels (*g, n*) mit *n = pq* verwendet, wobei *p, q* zwei Primzahlen sind.

6. Verfahren zur vertraulichen Abfrage des Vorhandenseins eines Datensatzes in einer Datenbank nach Anspruch 5, **dadurch gekennzeichnet, dass** der Server als Antwort eine erste und eine zweite Verschlüsselung zurückgibt, die in Zeile $q_m$ gespeichert sind, wobei der zweite Benutzer eine Entschlüsselung jeder der ersten und zweiten Verschlüsselung mit Hilfe des privaten Schlüssels seines homomorphen Kryptosystems vornimmt und dann mit Hilfe desselben privaten Schlüssels eine Entschlüsselung der so erhaltenen Ergebnisse vornimmt, nachdem er sie verknüpft hat.

7. Verfahren zur vertraulichen Abfrage des Vorhandenseins eines Datensatzes in einer Datenbank nach Anspruch 5, **dadurch gekennzeichnet, dass** die additive homomorphe Verschlüsselung eine Vielzahl *N* von Verschlüsselungen von "0" durch eine Pallier-Verschlüsselung, $h_i$, *i* = 1,..,*N*, verwendet, wobei die additive homomorphe Verschlüsselung einer ganzen Zahl µ durch Folgendes erhalten wird:

$$c = g^{\mu} \prod_{i=1}^{N} \max(1, u_i h_i) \, mod \, n^2$$

wobei $u_i$, *i* = 1,..,*N* zufällige Bits sind, die ausgewählt werden, um die Ziffern mit "0" zu verschlüsseln.

8. Verfahren zur vertraulichen Abfrage des Vorhandenseins eines Datensatzes in einer Datenbank nach Anspruch 7, **dadurch gekennzeichnet, dass** die Ziffern von "0" ein für alle Mal berechnet und vom zweiten Benutzer gespeichert werden.

9. Verfahren zur vertraulichen Abfrage des Vorhandenseins eines Datensatzes in einer Datenbank nach einem der vorstehenden Ansprüche, **dadurch gekennzeichnet, dass** die Querverschlüsselung der Zeilen der Datenbank ein für alle Mal vom Server durchgeführt wird, wenn der zweite Benutzer vom ersten Benutzer zur Abfrage der Datenbank autorisiert worden ist.

10. Verfahren zur vertraulichen Abfrage des Vorhandenseins eines Datensatzes in einer Datenbank nach einem der Ansprüche 1 bis 8, **dadurch gekennzeichnet, dass** die Querverschlüsselung der Zeilen der Datenbank bei jeder Abfrage durch den zweiten Benutzer dynamisch vom Server durchgeführt wird.

**Claims**

1. A method for confidentially querying the presence of a record in a database hosted by a server, said records being stored in the database in the form of digital fingerprints, each digital fingerprint being obtained by hashing a record using a public hash function and each row of the database containing the digital fingerprints sharing their first m > 1 bits, **characterised in that**:

   - a first user has a symmetric stream cipher key and a second user has an at least additive homomorphic cryptosystem (310);
   - the rows of the database are encrypted using said stream cipher by adding masks each having the size of a row of the database;
   - the first user authorises access to the database to the second user by encrypting the inverse masks using the public key of said homomorphic cryptosystem and by transmitting the inverse masks thus encrypted to the server (315);
   - the rows of the database are transcripted (325) in the homomorphic domain by adding to said rows the inverse masks thus encrypted;
   - the second user calculates the digital fingerprint of the record using said public hash function and deduces therefrom an integer value, $q_m$, corresponding to the first m bits (330);
   - the second user constructs a query in the form of a first vector of size $2^m$ consisting of a homomorphic cipher of the value "1" in position $q_m$ and homomorphic ciphers of the value "0" in the other positions, the query being transmitted to the server (340);

- the server evaluates in the homomorphic domain the scalar product between the first vector and a second vector of size $2^m$ consisting of the encrypted rows of the database, the result being transmitted as a response to the second user (345);

- the second user decrypts said response using the private key of his homomorphic cryptosystem and deduces therefrom the clear content of the row $q_m$ of the database (350);

- the second user searches whether the digital fingerprint of the record is among the digital fingerprints of the row $q_m$ thus obtained (360).

2. The method for confidentially querying the presence of a record in a database according to claim 1, **characterised in that** the stream cipher uses an encryption primitive selected from AES-CTR, Trivium and Grain.

3. The method for confidentially querying the presence of a record in a database according to claim 1 or 2, **characterised in that** the public cryptographic hash function is SHA-3.

4. The method for confidentially querying the presence of a record in a database according to one of the preceding claims, **characterised in that** the homomorphic cryptosystem is an additive homomorphic encryption without being FHE.

5. The method for confidentially querying the presence of a record in a database according to claim 4, **characterised in that** the additive homomorphic encryption uses a public key Paillier cryptosystem (g, n) with n = pq where p, q are two prime numbers.

6. The method for confidentially querying the presence of a record in a database according to claim 5, **characterised in that** the server returns as a response a first and a second ciphers stored in row $q_m$, the second user performing a decryption of each of the first and second ciphers using the private key of his homomorphic cryptosystem, then performs a decryption using this same private key of the results thus obtained after having concatenated them.

7. The method for confidentially querying the presence of a record in a database according to claim 5, **characterised in that** the additive homomorphic encryption uses a plurality N of ciphers of "0" by a Pallier encryption, $h_i$, i = 1,..,N, the additive homomorphic encryption of an integer $\mu$ being obtained by:

$$c = g^\mu \prod_{i=1}^{N} max(1, u_i h_i) \ mod \ n^2$$

where $u_i$, i = 1,..,N are random bits selecting said ciphers of "0".

8. The method for confidentially querying the presence of a record in a database according to claim 7, **characterised in that** the ciphers of "0" are calculated once and for all and stored by the second user.

9. The method for confidentially querying the presence of a record in a database according to one of the preceding claims, **characterised in that** the transcryption of the rows of the database is carried out once and for all by the server when the second user has been authorised to query the database by the first user.

10. The method for confidentially querying the presence of a record in a database according to one of claims 1 to 8, **characterised in that** the transcryption of the rows of the database is carried out dynamically by the server at each query of the second user.

110

$s_k^A$

A

$(\ell_i + b_i) \bmod n$

140

$[-b_i]_B$

130

$pk^B\_H$ 120

$R(q_m)$

$S(q_m)$

B

$sk^B\_H$

FIG. 1

$i = 1$

$$\ell_1$$

$$\boxed{E_{11}} \boxed{E_{12}} \text{----------} \boxed{E_{1L}}$$

$i = 2^m$

$$\ell_{2^m}$$

$\Big\} \; 210$

$i = 1$

$$\left(\ell_1 + b_1\right) \bmod n$$

$i = 2^m$

$$\left(\ell_{2^m} + b_{2^m}\right) \bmod n$$

$\Big\} \; 220$

$i = 1$

$$\left[\ell_1\right]_B$$

$$\underbrace{\qquad\qquad}_{\beta_1^1} \underbrace{\qquad\qquad\qquad}_{\beta_1^1}$$

$i = 2^m$

$$\left[\ell_{2^m}\right]_B$$

$$\underbrace{\qquad\qquad}_{\beta_{2^m}^1} \underbrace{\qquad\qquad\qquad}_{\beta_{2^m}^2}$$

$\Big\} \; 230$

# FIG. 2

$$\left( sk^B \_H, pk^B \_H \right)$$

310

$$[-b_i]_B$$

315

transchiffrement des lignes de la base

325

hachage de l'enregistrement recherché calcul de $q_m$

330

construction de la requête

$R(q_m) = \mathbf{u}$

340

$R(q_m)$

calcul du produit scalaire **d.u** dans le domaine homomorphe

345

déchiffrement par $sk^B \_H$

350

$S(q_m)$

recherche de l'empreinte dans la réponse déchiffrée

360

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- EncryptedQuery scalable Private Information Retrieval. *EnQuery*, 29 November 2018

- *Practical personalized genomics in the encrypted domain*